# EUROPEAN PATENT APPLICATION

(11) **EP 4 177 642 A1**
(43) Date of publication of application: **10.05.2023**
(21) Application number: 21834674.0
(22) Date of filing: 25.05.2021
(51) Int. Cl.: G01T 1/17, G01T 1/20, G01T 1/24, H04N 5/357

(54) **RADIATION DETECTOR**

(30) Priority: 01.07.2020 JP 2020113825
(71) Applicant: Canon Electron Tubes & Devices Co., Ltd., Otawara-shi, Tochigi 324-0036 (JP)
(72) Inventor: MIBUKA, Ryo, Otawara-shi, Tochigi 324-0036 (JP); ONIHASHI, Hiroshi, Otawara-shi, Tochigi 324-0036 (JP)
(74) Representative: Henkel & Partner mbB
(86) International application number: PCT/JP2021/019860
(87) International publication number: WO 2022/004199

(57) **Abstract**

A radiation detector according to an embodiment comprises: an array substrate which has a plurality of detection parts for detecting radiation directly or by means of a scintillator; an analogue circuit which read out an image data signal from the plurality of detection parts; a digital circuit which constructs a radiation image on the basis of a signal from the analogue circuit; and an inductor which is connected between a ground of the analogue circuit and a ground of the digital circuit.

## Description

### [Technical Field]

Embodiments of the invention relate to a radiation detector.

### [Background Art]

An X-ray detector is an example of a radiation detector. A general X-ray detector includes, for example, a scintillator, an array substrate, and a circuit part. The scintillator converts incident X-rays into fluorescence. The array substrate includes multiple photoelectric conversion parts that include photoelectric conversion elements and thin film transistors, and converts the fluorescence generated by the scintillator into a charge. The circuit part includes an analog circuit and a digital circuit. The analog circuit reads the charge (an image data signal) from the multiple photoelectric conversion parts. The digital circuit configures an X-ray image based on the image data signal that is read.

When the X-ray detector is used in medical care, the X-ray irradiation amount on the human body is kept as low as possible; therefore, the intensity of the X-rays incident on the X-ray detector is extremely weak. Therefore, because the image data signal that is read from the multiple photoelectric conversion parts is exceedingly faint, there is a risk that the quality of the X-ray image may be degraded when even slight noise is mixed into the image data signal.

Also, in recent years, to perform an accurate diagnosis, it is desirable to realize higher density by providing more photoelectric conversion parts and by faster reading and processing of the image data signal. Therefore, faster processing in a digital circuit is necessary; the operating clock is faster; the noise is increased; and the heat generation amount is large. As a result, there is a risk that the quality of the X-ray image may be further reduced because noise is more easily mixed into the analog circuit.

It is therefore desirable to develop a radiation detector in which the mixing of the noise from the digital circuit into the analog circuit can be suppressed.

### [Prior Art Documents]

### [Patent Literature]

[Patent Document 1]
JP-A 2003-249637 (Kokai)

### [Summary of Invention]

### [Technical Problem]

A problem to be solved by the invention is to provide a radiation detector in which the mixing of noise from a digital circuit into an analog circuit can be suppressed.

### [Solution to Problem]

A radiation detector according to an embodiment includes an array substrate including multiple detecting parts detecting radiation directly or in collaboration with a scintillator, an analog circuit reading an image data signal from the multiple detecting parts, a digital circuit configuring a radiation image based on a signal from the analog circuit, and an inductor connected between a ground of the analog circuit and a ground of the digital circuit.

### [Brief Description of Drawings]

[FIG. 1]

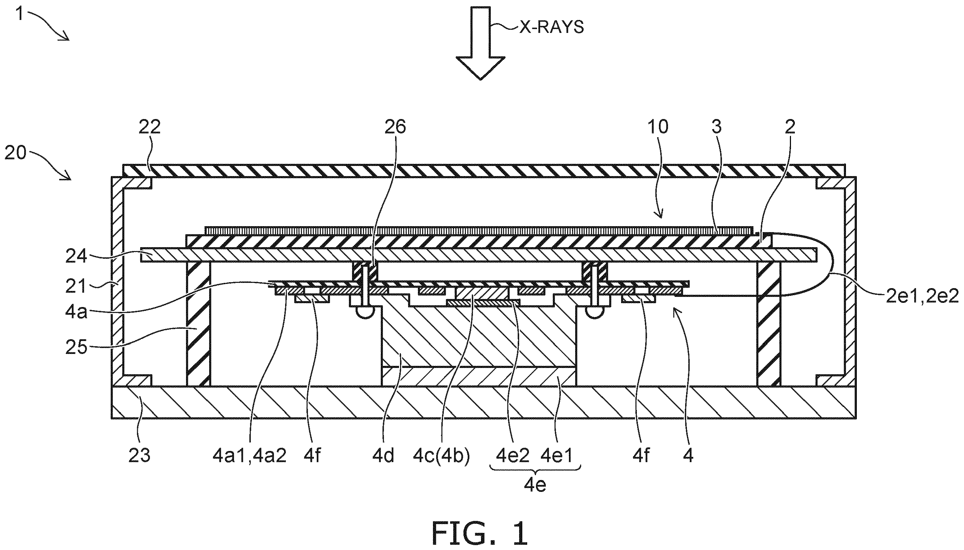

   FIG. 1 is a schematic cross-sectional view illustrating an X-ray detector according to an embodiment.
[FIG. 2]

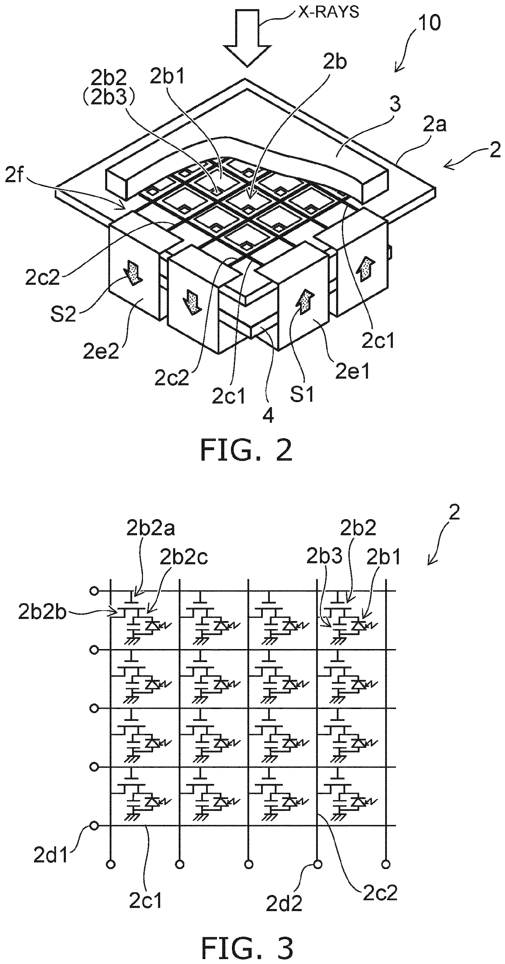

   FIG. 2 is a schematic perspective view illustrating a detection module.
[FIG. 3]
   FIG. 3 is a circuit diagram of an array substrate.
[FIG. 4]

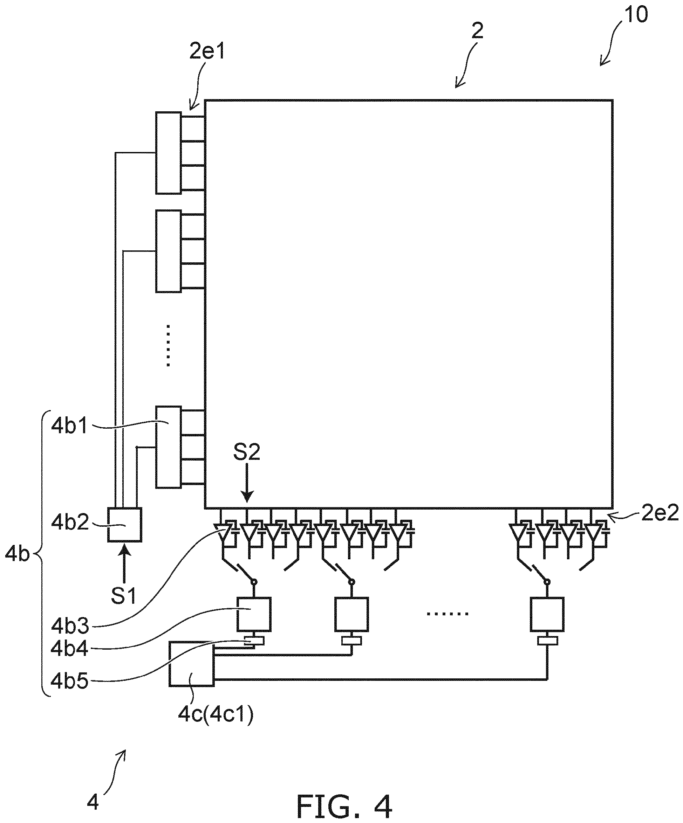

   FIG. 4 is a block diagram of the detection module.
[FIG. 5]

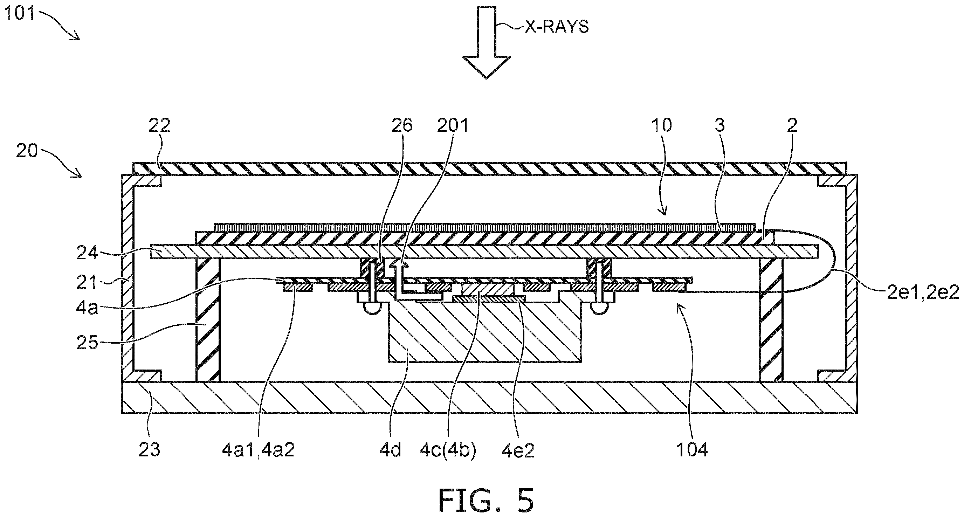

   FIG. 5 is a schematic cross-sectional view illustrating an X-ray detector according to a comparative example.
[FIG. 6]

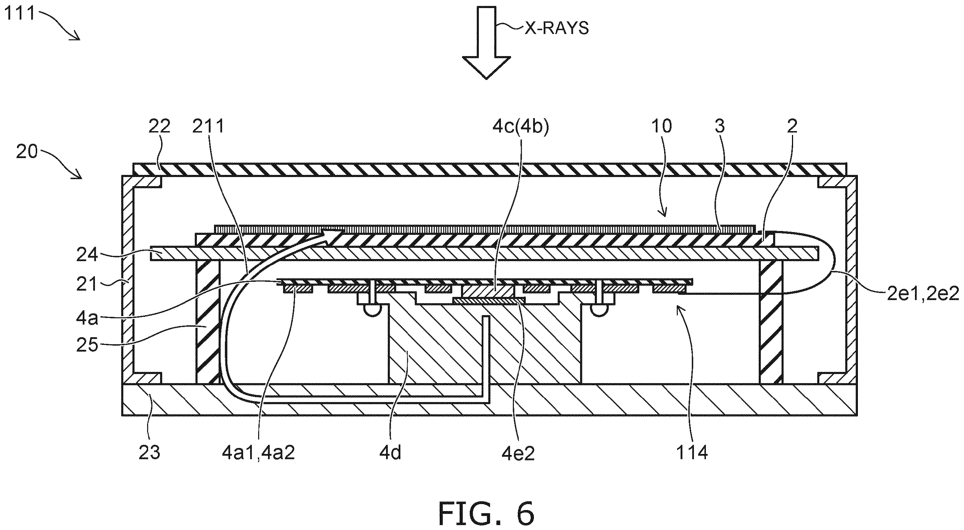

   FIG. 6 is a schematic cross-sectional view illustrating an X-ray detector according to a comparative example.

### [Description of Embodiments]

Embodiments will now be illustrated with reference to the drawings. Similar components in the drawings are marked with the same reference numerals; and a detailed description is omitted as appropriate.

Radiation detectors according to embodiments of the invention also are applicable to various radiation other than X-rays such as γ-rays, etc. Herein, as an example, the case relating to X-rays is described as a typical example of radiation. Accordingly, applications to other radiation also are possible by replacing "X-ray" of embodiments described below with "other radiation".

Also, an X-ray detector 1 illustrated below can be an X-ray planar sensor that detects an X-ray image that is a radiation image. X-ray planar sensors can be broadly divided into direct conversion and indirect conversion.

An indirect conversion X-ray detector includes, for example, an array substrate that includes multiple photoelectric conversion parts, and a scintillator that is located on the multiple photoelectric conversion parts and converts X-rays into fluorescence (visible light). In an indirect conversion X-ray detector, X-rays incident from the outside are converted into fluorescence by the scintillator. The generated fluorescence is converted into charge by the multiple photoelectric conversion parts.

A direct conversion X-ray detector includes, for example, a photoelectric conversion film made of amorphous selenium, etc. In the direct conversion X-ray detector, X-rays incident from the outside are absorbed by the photoelectric conversion film and directly converted into charge. Known technology is applicable to the basic configuration of the direct conversion X-ray detector; and a detailed description is therefore omitted.

Although the indirect conversion X-ray detector 1 is illustrated as an example hereinbelow, the invention also is applicable to a direct conversion X-ray detector.

In other words, it is sufficient for the X-ray detector to include multiple detecting parts that convert X-rays into electrical information. For example, the detecting part can detect X-rays directly or in collaboration with a scintillator.

Also, for example, the X-ray detector 1 can be used in general medical care, etc. However, the applications of the X-ray detector 1 are not limited to general medical care.

FIG. 1 is a schematic cross-sectional view illustrating the X-ray detector 1 according to the embodiment.
FIG. 2 is a schematic perspective view illustrating a detection module 10.
FIG. 3 is a circuit diagram of an array substrate 2.
FIG. 4 is a block diagram of the detection module 10.

As shown in FIGS. 1 to 4, the X-ray detector 1 can include the detection module 10 and a housing 20.

The detection module 10 can include the array substrate 2, a scintillator 3, and a circuit part 4.

The detection module 10 can be located inside the housing 20.

The array substrate 2 can convert the fluorescence converted from the X-rays by the scintillator 3 into charge.

The array substrate 2 can include a substrate 2a, a photoelectric conversion part 2b, a control line (or gate line) 2c1, a data line (or signal line) 2c2, a protective layer 2f, etc. The numbers of the photoelectric conversion parts 2b, the control lines 2c1, the data lines 2c2, etc., are not limited to those illustrated.

In the X-ray detector 1 according to the embodiment, the photoelectric conversion part 2b is a detecting part that detects X-rays in collaboration with the scintillator 3.

The substrate 2a is plate-shaped and can be formed from, for example, alkali-free glass, a polyimide resin, etc. For example, the planar shape of the substrate 2a can be quadrilateral.

Multiple photoelectric conversion parts 2b can be located at one surface of the substrate 2a. The photoelectric conversion parts 2b can be located in regions defined by the control lines 2c1 and the data lines 2c2. The multiple photoelectric conversion parts 2b can be arranged in a matrix configuration. One photoelectric conversion part 2b corresponds to one pixel (pixel) of an X-ray image.

A photoelectric conversion element 2b1 and a thin film transistor (TFT; Thin Film Transistor) 2b2, i.e., a switching element, can be provided in each of the multiple photoelectric conversion parts 2b.

Also, a storage capacitor 2b3 that stores the charge converted by the photoelectric conversion element 2b1 can be included. For example, the storage capacitor 2b3 can be film-shaped and can be located under each thin film transistor 2b2. However, according to the capacitance of the photoelectric conversion element 2b1, the photoelectric conversion element 2b1 also can be used as the storage capacitor 2b3.

For example, the photoelectric conversion element 2b1 can be a photodiode, etc.

The thin film transistor 2b2 can switch between storing and discharging charge to and from the storage capacitor 2b3. The thin film transistor 2b2 can include a gate electrode 2b2a, a drain electrode 2b2b, and a source electrode 2b2c. The gate electrode 2b2a of the thin film transistor 2b2 can be electrically connected with the corresponding control line 2c1. The drain electrode 2b2b of the thin film transistor 2b2 can be electrically connected with the corresponding data line 2c2. The source electrode 2b2c of the thin film transistor 2b2 can be electrically connected to the corresponding photoelectric conversion element 2b1 and storage capacitor 2b3. Also, the storage capacitor 2b3 and the anode side of the photoelectric conversion element 2b1 can be electrically connected to the ground (the analog ground) of a wiring pattern 4a1 to which an analog circuit 4b described below is electrically connected.

Multiple control lines 2c1 can be arranged parallel to each other at a prescribed spacing. For example, the control line 2c1 can extend in a row direction. One control line 2c1 can be electrically connected with one of multiple wiring pads 2d1 located at the peripheral edge vicinity of the substrate 2a. One of the multiple interconnects located in a flexible printed circuit board 2e1 can be electrically connected to one wiring pad 2d1. The other ends of the multiple interconnects located in the flexible printed circuit board 2e1 each can be electrically connected with the analog circuit 4b (a gate driver 4b1) located in the circuit part 4.

Multiple data lines 2c2 can be arranged parallel to each other at a prescribed spacing. For example, the data line 2c2 can extend in a column direction orthogonal to the row direction. One data line 2c2 can be electrically connected with one of multiple wiring pads 2d2 located at the peripheral edge vicinity of the substrate 2a. One of the multiple interconnects located in a flexible printed circuit board 2e2 can be electrically connected to one wiring pad 2d2. The other ends of the multiple interconnects located in the flexible printed circuit board 2e2 each can be electrically connected to the analog circuit 4b (an integrating amplifier 4b3) located in the circuit part 4.

For example, the control line 2c1 and the data line 2c2 can be formed using a low-resistance metal such as aluminum, chrome, etc.

The protective layer 2f can cover the photoelectric conversion part 2b, the control line 2c1, the data line 2c2, etc. The protective layer 2f can include, for example, at least one of an oxide insulating material, a nitride insulating material, an oxynitride insulating material, or a resin.

The circuit part 4 can be located at the side of the array substrate 2 opposite to the side at which the scintillator 3 is located. The circuit part 4 can include a substrate 4a, the analog circuit 4b, a digital circuit 4c, a heat sink 4d, a heat conduction part 4e, and an inductor 4f.

The substrate 4a is plate-shaped and can include the wiring patterns 4a1 and 4a2 on a surface at the side opposite to the array substrate 2 side.

As described below, the analog circuit 4b can include the multiple gate drivers 4b1, a row selection circuit 4b2, the multiple integrating amplifiers 4b3, multiple selection circuits 4b4, and multiple AD converters 4b5. In such a case, the components and/or circuits that are included in the analog circuit 4b can be housed as an integrated circuit in one package. The package in which the analog circuit 4b is housed can be electrically connected with the wiring pattern 4a1. The wiring pattern 4a1 can be electrically connected with the flexible printed circuit boards 2e1 and 2e2. In other words, the analog circuit 4b can be electrically connected with the multiple control lines 2c1 via the flexible printed circuit board 2e1. The analog circuit 4b can be electrically connected with the multiple data lines 2c2 via the flexible printed circuit board 2e2.

As described below, the digital circuit 4c can include an image processing circuit 4c1. In such a case, the components and/or circuits that are included in the digital circuit 4c can be housed as an integrated circuit in one package. The package in which the digital circuit 4c is housed can be electrically connected with a wiring pattern 4a2. The package in which the digital circuit 4c is housed can be located in a region of the wiring pattern 4a2 in which a ground (a digital ground) is located.

The analog circuit 4b can read an image data signal S2 from the multiple photoelectric conversion parts 2b. Also, the analog circuit 4b may convert the image data signal S2 that is read into a digital signal.

As shown in FIG. 4, the analog circuit 4b can include the multiple gate drivers 4b1, the row selection circuit 4b2, the multiple integrating amplifiers 4b3, the multiple selection circuits 4b4, and the multiple AD converters 4b5. It is sufficient for the multiple AD converters 4b5 to be provided in one of the analog circuit 4b or the digital circuit 4c. A case where the multiple AD converters 4b5 are provided in the analog circuit 4b will now be described as an example.

A control signal S1 can be input to the row selection circuit 4b2. For example, the control signal S1 can be input from the image processing circuit 4c1, etc., to the row selection circuit 4b2. The row selection circuit 4b2 can input the control signal S1 to the corresponding gate driver 4b1 according to the scanning direction of the X-ray image. The gate driver 4b1 can input the control signal S1 to the corresponding control lines 2c1.

For example, the gate drivers 4b1 can sequentially input the control signal S1 to the control lines 2c1 via the flexible printed circuit boards 2e1. The thin film transistors 2b2 are set to the on-state by the control signal S1 input to the control lines 2c1; and the charge (the image data signal S2) from the storage capacitors 2b3 can be received.

Also, one integrating amplifier 4b3 can be electrically connected with one data line 2c2. The integrating amplifiers 4b3 can sequentially receive the image data signal S2 from the photoelectric conversion parts 2b. Then, the integrating amplifier 4b3 can integrate the current flowing within a certain amount of time and output a voltage corresponding to the integral to the selection circuit 4b4. Thus, the value of the current (the charge amount) flowing through the data line 2c2 within a prescribed interval can be converted into a voltage value. In other words, the integrating amplifiers 4b3 can convert the image data information corresponding to the intensity distribution of the fluorescence generated in the scintillator 3 into potential information.

The selection circuit 4b4 can sequentially read the image data signal S2 converted into the potential information by selecting the integrating amplifier 4b3 to be read.

The AD converter 4b5 can sequentially convert the image data signal S2 that is read into a digital signal. The image data signal S2 that is converted into the digital signal can be input to the digital circuit 4c (the image processing circuit 4c1).

The digital circuit 4c can include the image processing circuit 4c1. The digital circuit 4c can configure an X-ray image based on the signals from the analog circuit 4b.

When the multiple AD converters 4b5 are provided in the analog circuit 4b, the digital circuit 4c can configure an X-ray image based on the digital signal from the analog circuit 4b.

When the multiple AD converters 4b5 are provided in the digital circuit 4c, the digital circuit 4c can convert the image data signal S2 (the analog signal) from the analog circuit 4b into a digital signal and configure the X-ray image based on the converted digital signal.

The data of the configured X-ray image can be output from the digital circuit 4c to an external device.

The heat sink 4d can be located at the side of the substrate 4a opposite to the array substrate 2 side. For example, the heat sink 4d includes multiple heat dissipation fins and can be formed from a material having a high thermal conductivity. For example, the heat sink 4d can be formed from a metal such as aluminum, etc. For example, the heat sink 4d can be mounted together with the substrate 4a to a support plate 24, etc., by using a fastening member such as a screw, etc.

The heat conduction part 4e can include a heat conduction part 4e1 (corresponding to an example of a second heat conduction part) and a heat conduction part 4e2 (corresponding to an example of a first heat conduction part).

The heat conduction part 4e1 can be located between the heat sink 4d and the inner wall (a base part 23) of the housing 20.

The heat conduction part 4e2 can be located between the heat sink 4d and at least one of the package in which the analog circuit 4b is housed or the package in which the digital circuit 4c is housed. For example, the heat conduction part 4e1 and the heat conduction part 4e2 are sheet-like and can be formed from a resin, rubber, etc., in which a filler including a material having a high thermal conductivity is mixed.

If the heat conduction part 4e1 is included, the space between the heat sink 4d and the inner wall of the housing 20 can be filled. Therefore, the heat is easily transmitted from the heat sink 4d to the housing 20.

If the heat conduction part 4e2 is included, the space between the heat sink 4d and the package can be filled. Therefore, the heat is easily transmitted from the package to the heat sink 4d.

The inductor 4f can be located at the side of the substrate 4a opposite to the array substrate 2 side. The inductor 4f can include, for example, a main body that includes a magnetic body of ferrite or the like, and an electrically-conductive part that is coil-shaped, electrically-conductive, and located inside the main body. The electrically-conductive part can be, for example, a coil pattern that includes a metal such as copper or the like, a coil that includes a metal such as copper or the like, etc. The end portions at the two sides of the electrically-conductive part can be exposed outside the main body. One end portion of the electrically-conductive part can be electrically connected with the ground (the analog ground) of the wiring pattern 4a1 to which the analog circuit 4b is electrically connected. The other end portion of the electrically-conductive part can be electrically connected with the ground (the digital ground) of the wiring pattern 4a2 to which the digital circuit 4c is electrically connected.

Details related to the inductor 4f are described below.

As shown in FIG. 2, the scintillator 3 can be located on the multiple photoelectric conversion parts 2b. The scintillator 3 can convert the incident X-rays into fluorescence. The scintillator 3 can be provided to cover the region (the effective pixel region) on the substrate 2a in which the multiple photoelectric conversion parts 2b are located.

For example, the scintillator 3 can be formed using cesium iodide (CsI):thallium (Tl), sodium iodide (NaI):thallium (Tl), cesium bromide (CsBr):europium (Eu), etc. The scintillator 3 can be formed using vacuum vapor deposition. If the scintillator 3 is formed using vacuum vapor deposition, a scintillator 3 that is made of an aggregate of multiple columnar crystals can be formed.

Also, for example, the scintillator 3 can be formed using terbium-activated sulfated gadolinium (Gd₂O₂S/Tb or GOS), etc. In such a case, a trench part having a matrix configuration can be formed so that a quadrilateral prism-shaped scintillator 3 is provided for each of the multiple photoelectric conversion parts 2b.

Also, a not-illustrated reflective layer that covers the front side of the scintillator 3 (the X-ray incident surface side) can be included in the detection module 10 to increase utilization efficiency of the fluorescence and improve the sensitivity characteristics.

Also, a not-illustrated moisture-resistant part that covers the scintillator 3 and the reflective layer can be provided to suppress degradation of the characteristics of the scintillator 3 and the characteristics of the not-illustrated reflective layer due to water vapor included in the air.

As shown in FIG. 1, the housing 20 can include a cover part 21, an incident window 22, the base part 23, the support plate 24, a spacer 25, and a spacer 26.

The cover part 21 can be box-shaped and can have openings at the X-ray incident side and the side opposite to the X-ray incident side. Considering weight reduction, for example, the cover part 21 can be formed using a light metal such as an aluminum alloy, etc. Also, for example, the cover part 21 can be formed using a polyphenylene sulfide resin, a polycarbonate resin, a carbon-fiber-reinforced plastic (CFRP; Carbon-Fiber-Reinforced Plastic), etc.

The incident window 22 can be plate-shaped and can seal the opening at the X-ray incident side of the cover part 21. The incident window 22 can transmit X-rays. The incident window 22 can be formed using a material having a low X-ray absorptance. For example, the incident window 22 can be formed using a carbon-fiber-reinforced plastic, etc.

The base part 23 can be plate-shaped and can seal the opening of the cover part 21 at the side opposite to the X-ray incident side. The base part 23 may be formed to have a continuous body with the cover part 21. The material of the base part 23 is not particularly limited as long as the material is somewhat rigid. For example, the material of the base part 23 can be similar to the material of the cover part 21. The ground (the analog ground) of the wiring pattern 4a1 to which the analog circuit 4b is electrically connected can be electrically connected to the cover part 21 and/or the base part 23. In such a case, it is favorable for the cover part 21 and/or the base part 23 to be formed using a metal such as an aluminum alloy, etc.

The support plate 24 can be plate-shaped and can be located inside the cover part 21. The array substrate 2 can be located at the surface of the support plate 24 at the incident window 22 side. In such a case, the array substrate 2 may be fixed to the support plate 24; and the array substrate 2 may be detachable with respect to the support plate 24. It is favorable for the material of the support plate 24 to be somewhat rigid and to have an X-ray absorptance that is somewhat high. The material of the support plate 24 can be, for example, a metal such as stainless steel, an aluminum alloy, etc.

The spacer 25 can be columnar or tubular; and multiple spacers 25 can be located inside the cover part 21. The multiple spacers 25 can be located between the support plate 24 and the base part 23. For example, the fixation of the spacer 25 and the support plate 24 can be performed using a fastening member such as an adhesive, a screw, etc. The material of the spacer 25 is not particularly limited as long as the material is somewhat rigid. For example, the spacer 25 can be formed using a metal, a resin, etc.

The form, arrangement position, number, material, etc., of the spacer 25 are not limited to those illustrated. Also, the spacer 25 may not be used if the support plate 24 is supported inside the cover part 21. For example, a plate-shaped body that protrudes from the inner side surface of the cover part 21 into the interior of the cover part 21 may be provided, and the support plate 24 may be supported by the plate-shaped body.

The spacer 26 can be columnar or tubular; and multiple spacers 26 can be located inside the cover part 21. The multiple spacers 26 can be located between the support plate 24 and the substrate 4a. For example, the fixation of the multiple spacers 26 can be performed using fastening members such as an adhesive, screws, etc. The spacer 26 can be formed from an insulative material. For example, the spacer 26 can be formed using a resin, etc. The form, arrangement position, number, material, etc., of the spacer 26 are not limited to those illustrated.

The inductor 4f will now be described further.

As described above, the analog circuit 4b can read the image data signal S2 from the array substrate 2. The digital circuit 4c can configure an X-ray image based on the signal from the analog circuit 4b. In such a case, the analog circuit 4b and the digital circuit 4c each include ground lines; and the analog ground and the digital ground are separated.

Here, there are many cases where a signal including much noise flows in the digital ground. For example, there are cases where a signal that includes much noise from a power supply for driving the image processing circuit 4c1, etc., flows in the digital ground. Also, there are cases where the analog ground is directly connected to the housing 20 to stabilize the potential of the analog ground. Therefore, the noise of the digital ground side easily mixes into the analog ground side via the housing 20. When mixing into the analog ground side, there is a risk that the noise of the digital ground side may become noise of the X-ray image and degrade the quality of the X-ray image.

FIG. 5 is a schematic cross-sectional view illustrating an X-ray detector 101 according to a comparative example.

As shown in FIG. 5, the X-ray detector 101 includes the array substrate 2, the scintillator 3, and a circuit part 104.

The circuit part 104 includes the substrate 4a, the analog circuit 4b, the digital circuit 4c, the heat sink 4d, and the heat conduction part 4e2.

The digital circuit 4c for configuring the X-ray image is located in the region in which the digital ground is located.

As shown in FIG. 5, when the digital ground and the housing 20 (the support plate 24) are electrically connected via a screw, etc., there is a risk that noise 201 of the digital ground side may mix into the image data signal S2 read from the array substrate 2 (the multiple photoelectric conversion parts 2b) via the housing 20 (the support plate 24). When mixing into the image data signal S2, there is a risk that the noise 201 of the digital ground side may become noise of the X-ray image and degrade the quality of the X-ray image.

FIG. 6 is a schematic cross-sectional view illustrating an X-ray detector 111 according to a comparative example.

As shown in FIG. 6, the X-ray detector 111 includes the array substrate 2, the scintillator 3, and a circuit part 114.

The circuit part 114 includes the substrate 4a, the analog circuit 4b, the digital circuit 4c, the heat sink 4d, and the heat conduction part 4e2.

The digital circuit 4c for configuring the X-ray image is located in the region in which the digital ground is located.

As shown in FIG. 6, if the heat sink 4d is located at the housing 20 (the base part 23), the digital ground and the housing 20 (the support plate 24) are not electrically connected. Therefore, the mixing of the noise 201 described in reference to FIG. 5 can be suppressed.

However, because the heat sink 4d is formed from a metal such as aluminum, etc., there is a risk that noise 211 of the digital ground side may be mixed into the image data signal S2 read from the array substrate 2 (the multiple photoelectric conversion parts 2b) via the heat sink 4d, the base part 23, the spacer 25, and the support plate 24. In such a case, the path of the noise 211 is a long loop. Therefore, there is a risk that the noise 201 may mix into circuits and the like located at various locations along the long loop, causing noise of the X-ray image.

In contrast, in the X-ray detector 1 according to the embodiment, the inductor 4f is electrically connected between the analog ground and the digital ground. The inductor 4f includes a main body formed from a magnetic body of ferrite or the like, and an electrically-conductive part that is coil-shaped, electrically-conductive, and located inside the main body. Therefore, when the noise flows through the electrically-conductive part, at least a portion of the noise can be converted into heat. As a result, the mixing of the noise of the digital ground side into the image data signal S2 read from the array substrate 2 (the multiple photoelectric conversion parts 2b) via the digital ground and the analog ground can be suppressed.

Here, to perform an accurate diagnosis when the X-ray detector 1 is used in general medical care, etc., it is desirable for the X-ray detector 1 to have higher density by providing more photoelectric conversion parts 2b and to have faster reading and processing of the image data signal S2. Therefore, faster processing in the digital circuit 4c is necessary, and there is a tendency for the operating clock to be faster and for noise having many high-frequency components to increase.

In such a case, by providing the inductor 4f, the high-frequency potential fluctuation (the high-frequency components of the noise) can be effectively removed. Therefore, even when the operating clock is faster, the mixing of the noise into the image data signal S2 read from the array substrate 2 (the multiple photoelectric conversion parts 2b) can be suppressed.

Also, even if the noise of the digital ground side flows in the heat sink 4d, the path of the noise is a short loop between the heat sink 4d and the substrate 4a. Therefore, the mixing of the noise into other circuits and the like to become noise of the X-ray image can be suppressed.

Also, by at least one of the heat conduction part 4e1 or the heat conduction part 4e2 including a magnetic body of ferrite, etc., at least a portion of the noise of the digital ground side can be converted into heat when the noise flows through the at least one of the heat conduction part 4e1 or the heat conduction part 4e2. Therefore, mixing of the noise of the digital ground side into the image data signal S2 read from the array substrate 2 (the multiple photoelectric conversion parts 2b) can be more effectively suppressed.

Also, if at least one of the heat conduction part 4e1 or the heat conduction part 4e2 includes a magnetic body of ferrite, etc., the heat that is generated by the analog circuit 4b and/or the digital circuit 4c is easily transmitted to the housing 20. In other words, the heat dissipation of the package in which the analog circuit 4b is housed and the package in which the digital circuit 4c is housed can be improved.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

### [Reference Numeral List]

1 X-ray detector
2 array substrate
2a substrate
2b photoelectric conversion part
3 scintillator
4 circuit part
4a substrate
4a1 wiring pattern
4a2 wiring pattern
4b analog circuit
4c digital circuit
4c1 image processing circuit
4d heat sink
4e heat conduction part
4f inductor
10 detection module
20 housing

## Claims

1. A radiation detector, comprising:
an array substrate including a plurality of detecting parts, the plurality of detecting parts detecting radiation directly or in collaboration with a scintillator;
an analog circuit reading an image data signal from the plurality of detecting parts;
a digital circuit configuring a radiation image based on a signal from the analog circuit; and
an inductor connected between a ground of the analog circuit and a ground of the digital circuit.

2. The radiation detector according to claim 1, wherein
the inductor includes:
a main part including a magnetic body; and
an electrically-conductive part located inside the main part, the electrically-conductive part being coil-shaped and electrically conductive,
one end portion of the electrically-conductive part is connected with the ground of the analog circuit, and
an other end portion of the electrically-conductive part is connected with the ground of the digital circuit.

3. The radiation detector according to claim 1 or 2, wherein
the electrically-conductive part is a coil pattern that includes a metal, or a coil that includes a metal.

4. The radiation detector according to any one of claims 1 to 3, wherein
the electrically-conductive part converts at least a portion of noise from the digital circuit into heat.
